# EUROPÄISCHE PATENTSCHRIFT

(11) **EP 1 023 591 B1**
(45) Veröffentlichungstag und Bekanntmachung des Hinweises auf die Patenterteilung: **27.02.2002**
(21) Anmeldenummer: 98958195.4
(22) Anmeldetag: 12.10.1998
(51) Int. Cl.: G01N 27/407

(54) **AUFBAUSTRUKTUR FÜR NO x?-SENSOREN**
COMPOSITION STRUCTURE FOR NO x?-SENSORS
STRUCTURE DE FORMATION DE DETECTEURS DE NO x?

(30) Priorität: 14.10.1997 DE 19745328
(43) Veröffentlichungstag der Anmeldung: 02.08.2000
(73) Patentinhaber: ROBERT BOSCH GMBH, 70442 Stuttgart (DE)
(72) Erfinder: SCHULTE, Thomas, D-70376 Stuttgart (DE); WAHL, Thomas, D-75172 Pforzheim (DE); SCHUMANN, Bernd, D-71277 Rutesheim (DE); SCHUETZ, Reiner, D-71254 Ditzingen (DE); WASER, Rainer, D-52076 Aachen (DE)
(86) Internationale Anmeldenummer: DE9803005
(87) Internationale Veröffentlichungsnummer: WO9919721

(56) Entgegenhaltungen:
- EP-A- 0 468 500
- DE-A- 4 439 901
- DE-A- 19 652 968
- US-A- 5 543 025

## Beschreibung

Die Erfindung betrifft eine Aufbaustruktur für NOₓ-Sensoren aus einer ersten selektiv sauerstoffionenleitenden Schicht und einer zweiten gasdurchlässigen, nichtleitenden Schicht.

Es ist bekannt, daß Abgase von Verbrennungskraftmaschinen, insbesondere von Magermixmotoren, neben unverbrannten Kraftstoffanteilen und Sauerstoff auch Stickoxide und andere Gase enthalten. Die Zusammensetzung des Abgases wird ganz wesentlich von der Einstellung des Kraftstoff-Luft-Gemisches bestimmt, mit dem die Verbrennungskraftmaschine betrieben wird. Liegt beispielsweise Kraftstoff im stöchiometrischen Überschuß vor, finden sich erhebliche Mengen an unverbranntem oder nur teilweise verbranntem Kraftstoff im Abgas, während bei einem stöchiometrischen Überschuß des Sauerstoffs der Luft in dem Kraftstoff-Luft-Gemisch eine entsprechend höhere Konzentration des Sauerstoffs in dem Abgas zu verzeichnen ist. Zur Einstellung eines optimalen Kraftstoff-Luft-Gemisches ist es bekannt, die Zusammensetzung des Abgases in einer Proportionalsonde zu ermitteln. Die Grenzstromsonde weist hierbei einen zwischen zwei Elektroden angeordneten Festelektrolyten auf, wobei eine Elektrode dem Abgas über eine Diffusionsbarriere ausgesetzt ist. Bei einer an den Elektroden angelegten konstanten Spannung stellt sich aufgrund eines Sauerstoffkonzentrationsunterschiedes an den beiden Elektroden ein Grenzstrom ein, der mit einer Meßeinrichtung gemessen wird, und beispielsweise zum Einstellen des Kraftstoff-Luft-Gemisches, mit dem die Verbrennungskraftmaschine betrieben wird, ausgewertet wird.

Eine Möglichkeit zur Bestimmung von Sauerstoff und insbesondere von Stickoxiden in Gasgemischen wird in dem Artikel von N. Kato, K. Nagakaki und N. Ina, SAE 1996, Seiten 137 bis 142, beschrieben. Bei diesem dort beschriebenen Verfahren wird unter anderem als nachteilig die Reaktivität der Stickoxide und anderer Gaskomponenten mit Teilen der Elektrode angesehen.

In der unveröffentlichten deutschen Patentanmeldung mit dem Aktenzeichen 196 35 494.3 wird weiterhin eine Meßanordnung zur Bestimmung von Gasbestandteilen in Gasgemischen beschrieben, mit mindestens einer elektrochemischen Festelektrolytmeßzelle und mindestens einer dem zu messenden Gasgemisch ausgesetzten Kathode, wobei die Kathode von einer selektiv sauerstoffionenleitenden Schicht durch eine elektrisch nichtleitende, zumindest bereichsweise gasdurchlässige Schicht räumlich getrennt ist.

Entsprechend dieser Patentanmeldung muß für den Aufbau eines amperometrischen NOₓ-Sensors eine gemischtleitende keramische Membran mit katalytischer Inaktivität bezüglich Stickoxiden elektrisch isoliert über einer Festelektrolyt-Pumpzelle angebracht werden. Die hierbei eingesetzten Keramiken können aus Metalloxid bestehen, wobei häufig Perowskit-Keramiken eingesetzt werden.

Bisher wurden die gemischtleitenden Keramiken auf eine poröse Al₂O₃-Struktur als Supportmaterial aufgedruckt. Einige Bestandteile der Metalloxidkeramik diffundierten bei diesem Prozeß in die Al₂O₃-Struktur und bildeten an der Grenzfläche der Membran für Ionen nichtleitende bis schlecht leitende Phasen mit Spinellstruktur aus.

Ein weiteres Problem bestand darin, daß die als hervorragend gemischtleitend bekannten Keramikmaterialien jedoch in der Regel eine hohe katalytische Aktivität gegenüber NOₓ aufweisen. Andererseits zeigen die gegenüber NOₓ inaktiven Materialien, sogenannte Nikat-Materialien, nur eine geringe resultierende Sauerstoff-Permeationsrate.

Die Aufgabe vorliegender Erfindung bestand daher darin, eine Aufbaustruktur für NOₓ-Sensoren bereitzustellen, bei der das Supportmaterial den Austausch des Sauerstoffs in die Gasphase nicht wesentlich hemmt und die Struktur der gemischtleitenden Keramik und damit die ionische Leitfähigkeit nicht beeinflußt. Die gemischtleitende Membran sollte ferner über eine hohe Elektronen- und Ionenleitfähigkeit verfügen, so daß eine hohe Sauerstoffpermeabilität gegeben ist, wobei jedoch gleichzeitig die katalytische Aktivität gegenüber NOₓ möglichst gering sein sollte.

Die Aufgabe wird erfindungsgemäß durch eine Aufbaustruktur für NOₓ-Sensoren gelöst, die aus einer ersten selektiv sauerstoffionenleitenden Schicht und einer zweiten gasdurchlässigen, nichtleitenden Schicht besteht, die eine poröse Spinellstruktur aufweist, wobei die sauerstoffionenleitende Schicht aus einer gemischtleitenden keramik besteht, die auf der abgaszugewandten Seite eine Schicht aus einem Material aufweist, das gegenüber NOₓ katalytisch inaktiv ist.

Unter Spinellen versteht man eine Gruppe von Mineralien und synthetisch hergestellten Materialien mit der allgemeinen Formel AB₂X₄, wobei A ein zweiwertiges Metall, B ein drei- oder vierwertiges Metall und X = O, S, Se bedeutet. Als besonders bevorzugte Spinelle können Al₂O₃ · MgO und/oder Co₃O₄ eingesetzt werden. Durch den erfindungsgemäßen Einsatz der Spinelle wird möglicherweise die Standardreaktionsenthalpie zur Bildung von Produkten aus gemischtleitenden Perowskiten und der Spinelluntergrundstruktur gegenüber den bisher verwendeten Al₂O₃-Substraten erhöht. Damit könnte die Bildung der nichtleitenden Grenzphasen gehemmt werden.

Bei der Herstellung der gemischtleitenden Schicht können Platinunterlagen verwendet werden. Hierbei findet keine Reaktion zwischen der Unterlage und der Keramik statt. Das poröse Platin garantiert jedoch eine gute Haftung zwischen dem Untergrund und der gemischtleitenden Schicht.

Als Material, das gegenüber NOₓ katalytisch inaktiv ist, eignet sich beispielsweise Gd_{0,7}Ca_{0,3}CoO_{3-δ}, Gd_{0,7}Ca_{0,3}FeO_{3-δ}, Kompositstoffe von Mischungen aus Ce_{0,8}Gd_{0,2}O_{2-δ} und Gd_{0,7}Ca_{0,3}CoO_{3-δ}.

Diese Schicht kann mit Hilfe der Dickschichttechnik oder durch ein Bedampfungsverfahren auf die Schicht aus einer gemischtleitenden Keramik aufgebracht werden.

Hierbei muß es sich um eine mindestens mehrere Atomlagen dicke Schicht aus einem Nikat-Material handeln, das die gemischtleitende keramische Membran an seiner kanalseitigen Oberfläche passiviert. Auf diese Weise bleibt die hohe ionische Leitfähigkeit des Sauerstoffs durch das Keramikmaterial erhalten.

In einer bevorzugten Ausführungsform besteht die gemischtleitende Keramik aus einem Perowskit oder Elpasolith, insbesondere mit der Zusammensetzung Ca_{0,7}Sr_{0,7}CoO_{3-δ} oder SrFeCo_{0,5}O_{3-δ}.

Erfindungsgemäß wird nunmehr in vorteilhafter Weise durch die Modifikation der Untergrundstruktur die Variationsbreite der zum Einsatz geeigneten gemischtleitenden Membranmaterialien deutlich erweitert. So wird zum einen durch die Vermeidung der bisherigen Passivierung der Grenzfläche die notwendige Permeationsfähigkeit der Membran bei gleichbleibender effektiver Permeationsmenge pro Fläche deutlich verringert. Andererseits kann die gesamte Membranfläche durch die neuartige Aufbaustruktur wesentlich reduziert werden, da die Permeation durch das Keramikmaterial bei weiterbestehender katalytischer Inaktivität der Oberfläche wesentlich gesteigert wird.

Erfindungsgemäß wird somit eine Reduzierung der Sensordiffusionsstrecke erreicht und damit die Ansprechzeit des Sensors verringert.

Es ist daher in vorteilhafter Weise nunmehr möglich, bei gleichbleibender Membranfläche den Meßbereich des Sensors bezüglich des O₂/NOₓ-Verhältnisses zu erweitern.

Durch die Kontaminierung der Oberfläche ergibt sich ferner in vorteilhafter Weise eine Verringerung bzw. Hemmung von Alterungs- bzw. Drifterscheinungen in der keramischen Membran.

Bei konstanter Überdimensionierung der notwendigen Membranfläche, die mindestens zur vollständigen Sauerstoffentfernung benötigt wird, wird durch die insgesamt gesteigerte Permeation pro Fläche es nunmehr möglich, daß ein größerer Oberflächenanteil kontaminiert werden kann, ohne das Verhalten des Sensors nachteilig zu beeinflussen.

Die Meßanordnung und die erfindungsgemäße Aufbaustruktur soll anhand beigefügter Zeichnung näher erläutert werden.

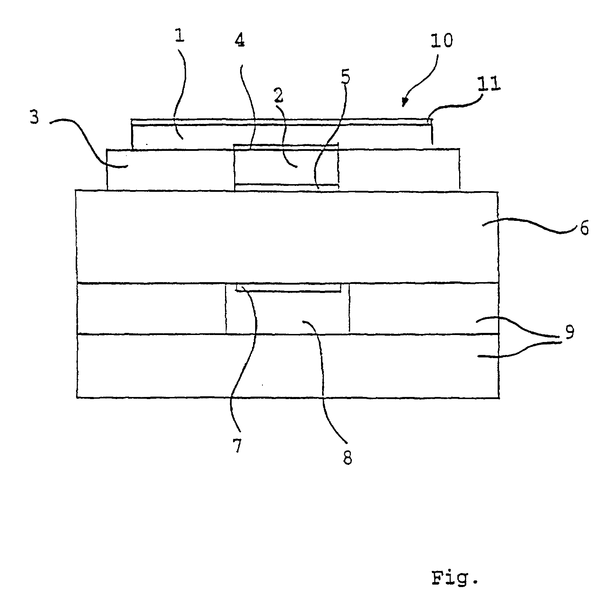

Die Figur zeigt eine allgemein mit 10 bezeichnete Meßanordnung. Diese Meßanordnung 10 besitzt einen im wesentlichen blättchenförmig ausgebildeten Festelektrolyten 6, an dessen Seite eine als Anode 7 geschaltete Elektrode angeordnet ist. An der der Anode 7 gegenüberliegenden Seite des Festelektrolyten 6, beispielsweise aus einer Zirkoniumdioxid-Yttriumoxid-Keramik, ist eine als Kathode 5 geschaltete Elektrode angeordnet. Die Kathode 5 ist teilweise mit einer gasdichten Schicht 3, beispielsweise aus α- oder γ-Aluminiumoxid oder einer Schicht aus rein ionenleitendem Material, bedeckt. Sie grenzt an die gasdurchlässige nichtleitende Schicht 2, die eine poröse Spinellstruktur aufweist, an. Diese elektrisch isolierenden Schichten 2, 3 sind mit einer weiteren Schicht 1 bedeckt, die aus einer gemischtleitenden Metalloxidkeramik besteht. Sie stellt eine selektiv sauerstoffionenleitende Schicht dar. Die Dicke dieser Schicht variiert zwischen 5 und 200 µm. Mit 4 ist die Grenzfläche der gemischtleitenden keramischen Membran 1 mit der nichtleitenden Schicht 2 bezeichnet. Auf der gemischtleitenden keramischen Membran 1 liegt die gegenüber NOₓ katalytisch inaktive Schicht 11. Sowohl die Anode 7 als auch die Kathode sind über nicht dargestellte Leiterbahnen mit ebenfalls nicht dargestellten Anschlüssen der Meßanordnung 10 verbunden. Die Elektroden 5, 7 bestehen vorzugsweise aus Platin oder einem anderen korrosionsbeständigen Metall bzw. einer Metallegierung. Unterhalb der Anode 7 ist ein Diffusionskanal 8 angebracht, durch den Referenzluft an die Anode 7 geführt werden kann. Der Diffusionskanal 8 für die Referenzluft ist in einem aus mehreren Schichten aufgebauten Mehrlagenkörper 9 angebracht, der beispielsweise aus Zirkoniumdioxid besteht.

## Patentansprüche

1. Aufbaustruktur für NOₓ-Sensoren aus einer ersten selektiv sauerstoffionenleitenden Schicht (1) und einer zweiten gasdurchlässigen, nichtleitenden Schicht (2), die eine poröse Spinellstruktur aufweist, wobei die sauerstoffionenleitende Schicht aus einer gemischtleitenden Keramik besteht, die auf der abgaszugewandten Seite eine Schicht (11) aus einem Material aufweist, das gegenüber NOₓ katalytisch inaktiv ist.

2. Aufbaustruktur nach Anspruch 1, wobei die gemischtleitende Keramik aus einem Perowskit oder Elpasolith, insbesondere Ca_{0,7}Sr_{0,7}CoO_{3-δ} oder SrFeCo_{0,5}O_{3-δ} besteht.

3. Aufbaustruktur nach Anspruch 1 oder 2, wobei die nichtleitende poröse Spinellstruktur Al₂O₃ · MgO und/oder Co₃O₄ umfaßt.

4. Aufbaustruktur nach einem der vorhergehenden Ansprüche 1 bis 3, wobei die gegenüber NOₓ katalytisch inaktive Schicht (11) mit Hilfe der Dickschichttechnik oder durch ein Bedampfungsverfahren auf die Schicht (1) aus einer gemischtleitenden Keramik aufgebracht ist.

5. Elektrochemische Meßanordnung für NOₓ-Sensoren, **dadurch gekennzeichnet, daß** über der Kathode (5) eine Aufbaustruktur nach einem der vorgehenden Ansprüche angeordnet ist.

## Claims

1. Composition structure for NOₓ sensors composed of a first, selectively oxygen-ion-conductive layer (1) and of a second gas-permeable, non-conductive layer (2) which has a porous spinel structure, the oxygen-ion-conductive layer being composed of a mixture-conductive ceramic which has, on the side facing the exhaust gas, a layer (11) made of a material which is catalytically inactive with respect to NOₓ.

2. Composition structure according to Claim 1, the mixture-conductive ceramic being composed of a perovskite or elpasolith, in particular Ca_{0.7}Sr_{0.7}CoO_{3-δ} or SrFeCo_{0.5}O_{3-δ}.

3. Composition structure according to Claim 1 or 2, the non-conductive porous spinel structure comprising Al₂O₃ · MgO and/or Co₃O₄.

4. Composition structure according to one of the preceding Claims 1 to 3, the layer (11) which is catalytically inactive with respect to NOₓ being applied, using the thick-film technique or by means of an evaporation method, to the layer (1) made of a mixture-conductive ceramic.

5. Electrochemical measuring arrangement for NOₓ sensors, **characterized in that** a composition structure according to one of the preceding claims is arranged over the cathode (5).

## Revendications

1. Structure de capteur NOₓ, comprenant une première couche (1), à conduction sélective d'ions d'oxygène et une seconde couche (2) non-conductrice, perméable aux gaz, ayant une structure poreuse de spinelle, la couche conductrice d'ions d'oxygène étant en une céramique à conduction mélangée, ayant une couche (11) en une matière inactive catalytiquement vis-à-vis des composants NOₓ sur son côté non exposé aux gaz d'échappement.

2. Structure selon la revendication 1 dans laquelle la céramique à conduction mélangée est formée d'une perowskite ou d'une elpasolithe, notamment Ca_{0,7}Sr_{0,7}CoO_{3-δ} ou SrFeCo_{0,5}O_{3-δ}.

3. Structure selon l'une quelconque des revendications 1 ou 2,
dans laquelle
la structure de spinelle poreuse non-conductrice comprend Al₂O₃ . MgO ou/et Co₃O₄.

4. Structure selon l'une quelconque des revendications 1 à 3,
dans laquelle
la couche (11), catalytiquement inactive vis-à-vis des composants NOₓ, est appliquée en technique des couches épaisses ou par un procédé de dépôt à la vapeur sur la couche (1) d'une céramique à conduction mélangée.

5. Dispositif de mesure électrochimique pour des capteurs NOₓ,
**caractérisé en ce que**
sur la cathode (5) on a une structure correspondant à l'une des revendications précédentes.
